# EUROPEAN PATENT APPLICATION

(11) **EP 4 282 578 A1**
(43) Date of publication of application: **29.11.2023**
(21) Application number: 23173144.9
(22) Date of filing: 12.05.2023
(51) Int. Cl.: B23Q 1/03, B23Q 3/08, B25B 11/00, B27M 1/08

(54) **BLOCKING DEVICE FOR WORKPIECES**

(30) Priority: 23.05.2022 IT 202200010607
(71) Applicant: SCM Group S.p.A., 47921 Rimini (RN) (IT)
(72) Inventor: BIANCHI, Fabio, 47921 Rimini (RN) (IT)
(74) Representative: Tiburzi, Andrea

(57) **Abstract**

The present invention relates to a blocking device (1) of a workpiece, comprising a body (19), having an upper surface (17), intended to support said workpiece to clamp it, wherein said upper surface (17) has at least one opening (173), and wherein a vacuum duct (11) is formed inside said body (19) configured to be connected, when the blocking device (1) is in use, to a vacuum generating device for generating a vacuum, in particular a vacuum pump (P) connected to said at least one opening (173), wherein said blocking device (1) comprises a shutter device (18) arranged inside said body (19) configured to selectively close and open said vacuum duct (11).

The present invention also relates to a base-blocking device assembly (A), a machine (M) for machining workpieces and an operating method of the blocking device (1).

## Description

The present invention relates to an improved blocking device for workpieces to be worked, in particular pieces made of wood or similar materials, composite material, polymeric material, ceramic material, or other materials, and to a machine comprising this device. The present invention also relates to an operating method of the blocking device itself.

### Field of invention

More specifically, the invention concerns a blocking device, such as a suction cup and the like, designed and manufactured, in particular, to block workpieces on a work surface and allow their possible deactivation independently of other similar devices on the same work surface.

In the following, the description will be directed to a blocking device for blocking wooden pieces on a work surface, in a machine known as a bar machining center, but it is clear that the same should not be considered limited to this specific use.

### Prior art

As is well known, there are currently machines known as work centers, for subjecting pieces of wood or similar materials to various processes, such as milling, drilling, edging, and other processes, equipped with blocking devices, for blocking these workpieces on a worktable.

Depending on the type of machining to be performed, this worktable can be a multifunctional worktable or a worktable with bars.

In particular, in the so-called bar machining centers, said worktable comprises a plurality of bars, which are in turn provided with several support bases. These support bases are coupled to said blocking devices or to blocking devices for blocking said pieces on said worktable.

In general, said worktable is supported by a base, and said bars are parallel to each other and movable along said base.

Vacuum transmission channels are arranged along the bars, and connected to a vacuum generation device for generating a vacuum, in particular a vacuum pump.

Furthermore, compressed air transmission channels are arranged along the bars, connected to a compressed air system.

The vacuum transmission channels and the compressed air transmission channels transmit, in use, respectively, vacuum and compressed air to said support bases.

Said support bases are generally equipped with a vacuum supply channel and one or more compressed air supply channels, so as to be suitable both for operating the blocking devices, and for operating the blocking devices. If the support base is coupled, in use, to a blocking element, for example a suction cup, the vacuum adduction channel is used to transmit the vacuum to said blocking element and consequently to said workpiece. If the support base is coupled, in use, to a blocking device, for example a clamp, equipped with jaws, the compressed air supply channels are used to supply compressed air to the blocking device, for the purpose of moving the jaws to lock said pieces.

In the solutions according to the prior art, the vacuum is transmitted or interrupted for all the support bases. Thus, the blocking elements are operated or deactivated simultaneously, and it is not possible to select only some support elements to be vacuum-transmitted.

A drawback of this solution is that, in the case of small pieces, in which it is not necessary to use all the blocking elements present in the machine, the vacuum is transmitted to all the blocking elements simultaneously and without distinction, causing a degree of vacuum less than what would be achieved by using only the necessary blocking elements.

Another problem with this solution is that, when machining several small pieces simultaneously, loading the pieces into the machine can be difficult, due to the fact that the vacuum can only be activated or deactivated for all the clamping elements at the same time.

### Scope of the invention

In light of the above, it is, therefore, an object of the present invention to provide a blocking device, adaptable to commercially available machines, for workpieces to be machined in a machining center, designed to be activated or deactivated, by means of, respectively, the supply or interruption of vacuum, independently of the other blocking devices present in the machine.

Another object of the invention is to provide a blocking device which facilitates the loading of a plurality of small-sized pieces into the machine, by activating the necessary blocking devices as the different pieces are loaded.

A further object of the present invention is to provide a blocking element having a simple mechanical structure and a low production cost.

### Object of the invention

It is, therefore, a specific object of the present invention a blocking device of a workpiece, comprising a body, having an upper surface, intended to support said workpiece to clamp it, wherein said upper surface has at least one opening, and wherein a vacuum duct is formed inside said body configured to be connected, when the blocking device is in use, to a vacuum generating device for generating a vacuum, in particular a vacuum pump connected to said at least one opening, characterized in that said blocking device comprises a shutter device arranged inside said body configured to selectively close and open said vacuum duct.

Always according to the invention, said body may have inside a chamber, obtained in said body and communicating with said vacuum duct, and said shutter device may comprise a shuttle, housed in said chamber and movable between an opening position, in which the passage of the vacuum in said vacuum duct is allowed, and a closed position, in which the passage of the vacuum in said vacuum duct is prevented, and return means for returning said shuttle from said closed position to said open position.

Still according to the invention, said return means, such as a spring and the like, may be arranged between said shuttle and said body.

Advantageously according to the invention, said blocking device may comprise a gasket, arranged between said shuttle and the walls of said chamber, and shaped so as to be sealed with said shuttle, when the latter is in said closed position.

Further according to the invention, said blocking device may comprise at least one inlet conduit for compressed air or other fluid, and said shutter device may be arranged so as to close and selectively open said vacuum duct, by activating compressed air, or other fluid, passing through said compressed air inlet duct.

Preferably according to the invention, said shuttle may be operated pneumatically, through said compressed air duct, and it is thus movable between said open position and said closed position.

Always according to the invention, said vacuum duct may comprise a first portion and a second portion, between which said chamber is interposed, and wherein said shuttle may be movable between an open position, in which the passage of the vacuum between said first portion of said vacuum duct and said second portion is allowed, and a closed position, in which the passage of the vacuum between said first portion of said vacuum duct and said second portion is prevented.

Still according to the invention, said blocking device may comprise a fast vacuum outlet channel, in fluid communication with the environment outside the blocking device, wherein, when said shutter device opens said vacuum conduit, said fast vacuum outlet channel is not in fluid communication with said vacuum conduit, and wherein, when said shutter device closes said vacuum conduit, said fast vacuum outlet channel is in fluid communication with said vacuum conduit.

Advantageously according to the invention, said shuttle may be shaped so that, when it is in the open position, said outlet channel fast vacuum is not in fluid communication with said vacuum conduit, and when it is in the closed position, said rapid vacuum outlet channel is in fluid communication with said second portion of said vacuum duct.

Further according to the invention, said shuttle may be made of ferromagnetic material and may comprise an electromagnetic actuator, capable of producing an electromagnetic field on command, so as to move said shuttle from said open position to said closed position.

It is also object of the present invention a base-blocking device assembly comprising a blocking device as disclosed above, a support base, suitable for coupling with said blocking device, provided with a vacuum supply channel and at least one compressed air or other fluid supply channel, arranged to be connected, in use, respectively to said vacuum pipe and said compressed air inlet pipe.

It is further object of the present invention a machine, to work pieces made pf wood or similar materials, composite material, polymeric material, ceramic material or other materials, comprising a base, which extends in one direction, a work surface, arranged on said base and having one or more bars, each oriented in a direction, transversal to said direction, slidingly coupled to said base and movable along said direction, along which at least one vacuum transmission channel is arranged, connected, in use, to a vacuum generation device for generating a vacuum, in particular a vacuum pump, and at least one vacuum channel transmission of compressed air or other fluid, connected, in use, to a compressed air network, at least one support base, slidingly coupled to a respective bar, wherein said support base has a vacuum supply channel, and at least one air supply channel compressed or other fluid, connected, in use, respectively to said at least one vacuum transmission channel, and to said at least one compressed air transmission channel, characterized in that it comprises a blocking device as disclosed above, adapted to be coupled to said support base.

Always according to the invention, said at least one vacuum transmission channel may be formed, at least for a portion thereof, inside said bar.

Still according to the invention, said at least one compressed air transmission channel may be formed, at least for a portion thereof, inside said bar.

It is also object of the present invention a method of operation of the blocking device as disclosed above, comprising the following steps: a) supplying the vacuum to said blocking device, through said vacuum duct, in such a way to activate said blocking device and allow it to block a workpiece; b) supplying compressed air or other fluid to said blocking device, through said compressed air inlet duct, to actuate said shutter device, in such a way as to interrupt the transmission of the vacuum in said vacuum duct and allow the detachment of a piece.

### Brief description of the figures

The present invention will be now described, for illustrative but not limitative purposes, according to its preferred embodiments, with particular reference to the figures of the enclosed drawings, wherein:
figure 1 shows an isometric view of a machine, known as a bar working center, comprising a blocking device according to the invention;
figure 2 shows a bar of a bar machining center, on which a plurality of support bases are arranged, wherein one of the support bases is coupled to a blocking device according to the invention;

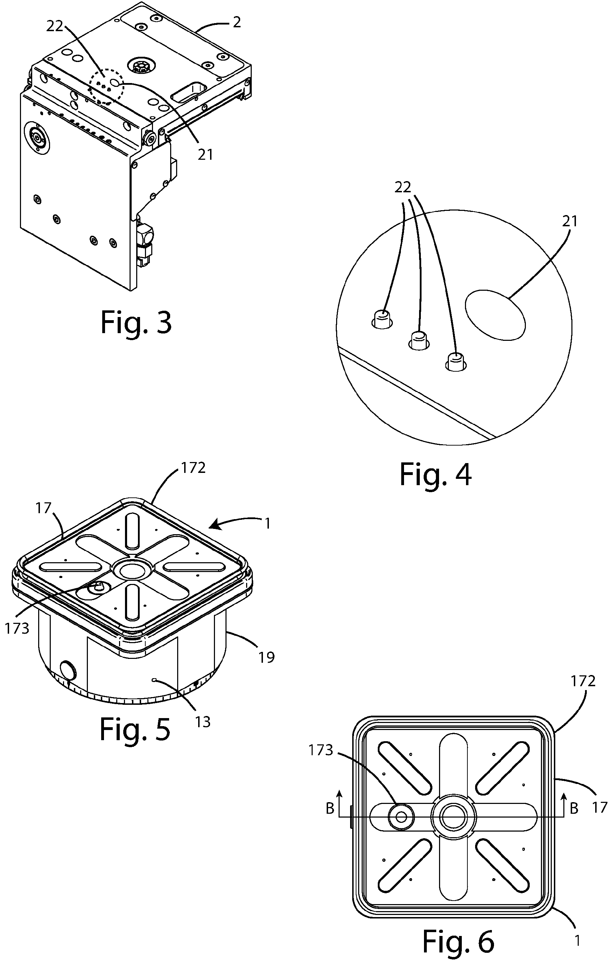

figure 3 shows an axonometric view of a support base;
figure 4 shows a detail view of said support base shown in figure 3;
figure 5 shows an axonometric view of a blocking device, according to the present invention;
figure 6 shows a top view of the blocking device according to the invention;
figure 7 shows a section of the blocking device, along the plane of line B-B shown in figure 6, when said blocking device is activated;
figure 8 shows a section of the blocking device, along the plane of line B-B shown in figure 6, when said blocking device is deactivated.

### Detailed description

In the various figures, similar parts will be indicated with the same reference numbers.

With reference to the attached figures, a blocking device 1 can be observed for pieces to be subjected to machining, such as milling, drilling, edging, or other machining, on a work surface. In particular, reference is made to pieces made of wood or similar materials, composite material, polymeric material, ceramic material, or other materials.

In the following, the description will be directed, by way of non-limiting example, to a blocking device for blocking pieces on a work surface, in a machine known as a bar working center, indicated in the figures with reference M.

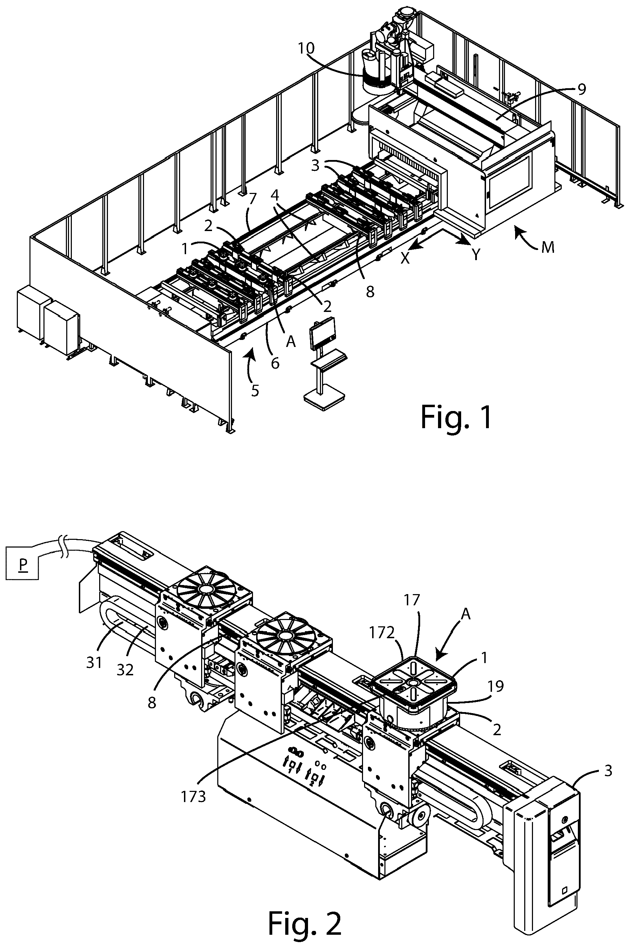

The machine M, as shown in figure 1, comprises a base 5, having two longitudinal members 6 and 7, which extend in an X direction. The machine M also comprises a work surface, arranged on said base 5 and having one or more bars 3, arranged parallel to each other, each one oriented in a Y direction, transversal to said X direction.

The bars 3 are movable along the X direction and can, in particular, slide along said longitudinal members 6 and 7, through first guides 4.

Each bar 3 is equipped with second guides 8, able to be slidingly coupled to one or more support bases 2.

The machine M also comprises a crosspiece 9, which extends in the Y direction, to which a machining head 10 is movably coupled. The crosspiece 9 is movable in the X direction.

The machine M has a control unit comprising machining programs to be executed on the pieces.

Along the bars 3 there are vacuum transmission channels 31, connected to a vacuum generation device for generating a vacuum, in particular a vacuum pump P.

In another embodiment said vacuum transmission channels 31 are obtained, at least for a portion thereof, inside a body of said bars 3.

Moreover, along the bars 3, one or more compressed air transmission channels 32 are arranged, connected to a compressed air system.

In an alternative embodiment said compressed air transmission channels 32 are obtained, at least for a portion thereof, inside a body of said bars 3.

The vacuum transmission channels 31 and the compressed air transmission channels 32 transmit, in use, respectively, vacuum and compressed air to said support bases 2.

The support bases 2 are movable along the bars 3, in the Y direction, to adapt to the different dimensions and arrangements of the pieces to be machined on the worktable.

Each support base 2 is suitable for coupling with a blocking device 1 or a blocking device (not shown in the figures).

Each of said support bases 2 has a vacuum supply channel 21 and one or more compressed air or other fluid supply channels 22.

The vacuum supply channel 21 is connected to one of said vacuum transmission channels 31, arranged along the respective bar 3.

Said one or more compressed air supply channels 22 are connected to said one or more compressed air transmission channels 32 arranged along the respective bar 3.

The vacuum adduction channel 21 is suitable for transmitting the vacuum to said blocking device 1, for example, a suction cup.

The one or more compressed air supply channels 22 supply compressed air to a possible blocking device, for example, a clamp, equipped with jaws, to move said jaws to clamp the workpieces to be machined.

Said blocking device 1, according to the invention, is equipped with a body 19 comprising an upper surface 17, equipped with a perimeter gasket 172. The upper surface 17 is intended to support the workpiece. The blocking device 1 has a vacuum duct 11, obtained in the body 19, connected to one or more openings 173, arranged on the upper surface 17, and connected, in use, to the vacuum supply channel 21, arranged in the support base 2.

Said vacuum duct 11 comprises a first portion 111 and a second portion 112, separated by a chamber 15, obtained in the body 19 of the blocking device 1. The first portion 111 has a symmetry axis D1. The second portion 112 has a symmetry axis D2.

In the embodiment described, the chamber 15 has a main development direction D3. The main development direction D3 is perpendicular to the symmetry axis D1 and to the symmetry axis D2. The first portion 111 of the vacuum duct 11 connects said vacuum supply channel 21 to said chamber 15. The second portion 112 of the vacuum duct 11 connects said chamber 15 to said upper surface 17 of the blocking device 1.

The blocking device 1 has an inlet duct for compressed air or other fluid 12, obtained in said body 19, connected to the chamber 15, and connected, in use, to one of the compressed air supply channels 22 arranged in the support base 2.

The blocking device 1 also comprises a shutter device 18, arranged so as to selectively close or open said vacuum duct 11. In the embodiment at issue, the selective opening and closing take place by actuating air compressed air passing through said compressed air inlet duct 12.

In the embodiment under examination, moreover, the shutter device 18 comprises a shuttle 14, housed in said chamber 15. Said blocking device 1 further comprises a gasket 16, arranged between said shuttle 14 and the walls of said chamber 15.

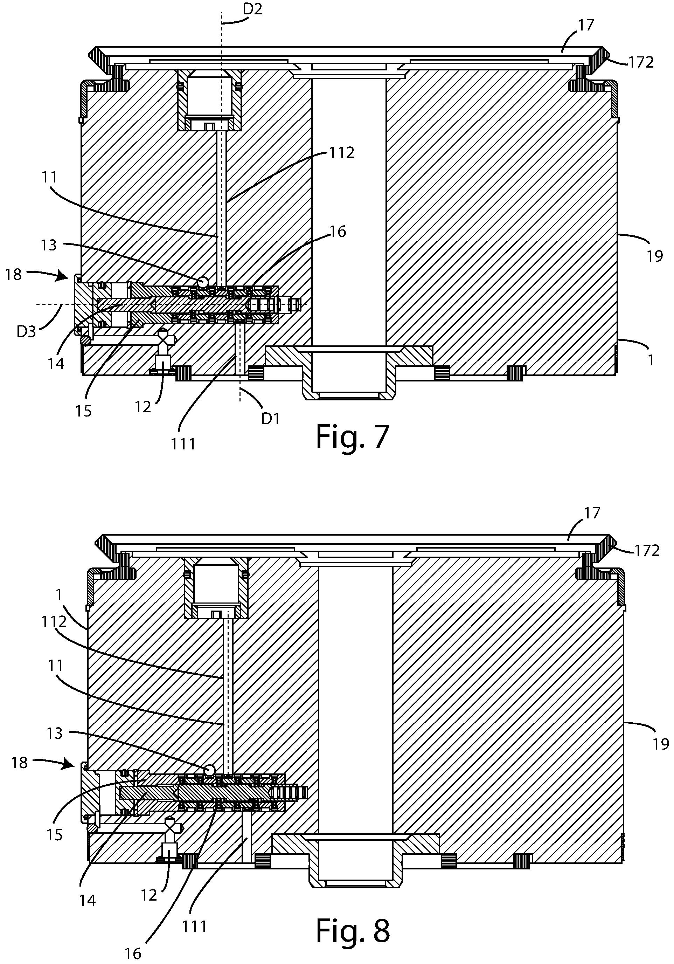

The shuttle 14 is movable between an open position, in which it allows the vacuum to pass between said first portion 111 of the vacuum duct 11 and the second portion 112 since said shuttle 14 is not sealed with said gasket 16; and a closed position, in which the passage of vacuum between the first portion 111 of the vacuum duct 11 and the second portion 112 is prevented since the shuttle 14 is sealed with the gasket 16, as shown respectively in figures 7 and 8.

The shuttle 14 is connected to the compressed air inlet duct 12 and can be operated pneumatically between said open position and said closed position, and vice versa.

The blocking device 1 further comprises return means, such as, in the present case, a spring and the like, arranged between said shuttle 14 and said body 19, to return said shuttle from said closed position to said open position.

The blocking device 1 also comprises a fast vacuum outlet channel 13, which is in fluid communication with the environment, external to the blocking device 1.

The shuttle 14 is shaped so that when it is in the open position, the fast vacuum outlet channel 13 is not in fluid communication with the vacuum conduit 11. When the shuttle 14 is in the closed position, the fast vacuum outlet channel 13 is in fluid communication with the second portion 112 of the vacuum conduit 11.

In some embodiments, the fast vacuum outlet channel 13 may not be present.

The blocking device 1 described above operates as follows.

When a specific blocking device 1 is activated, i.e. capable of blocking a workpiece to be machined, the vacuum is transmitted to the piece through said vacuum duct 11, connected to said vacuum supply channel 21, arranged in the support base 2.

In this activation configuration of the blocking device 1, the shuttle 14 is in the open position, therefore not sealed with said gasket 16, and does not hinder the passage between the first portion 111 of the vacuum duct 11 and the second portion 112 of the vacuum duct 11.

When the shuttle 14 is in the open position, the fast vacuum outlet channel 13 is not in fluid communication with the vacuum conduit 11 because otherwise it would not be possible to maintain the vacuum in the blocking device 1.

When it is desired to deactivate a specific blocking device 1, for example because it is not necessary for a process, the respective shutter 14 is operated pneumatically, through the compressed air inlet duct 12, thanks to the connection with said compressed air supply channel 22, arranged in the support base 2, and is moved to a closed position, sealed with said gasket 16. In this closed position, the shuttle 14 obstructs the vacuum passage between said first portion 111 of said vacuum duct 11 and said second portion 112.

When the shuttle 14 is in the closed position, the fast vacuum outlet channel 13 is in fluid communication with said second portion 112 of the vacuum duct 11, so as to restore the atmospheric pressure inside it, since the fast vacuum outlet channel 13 is in fluid communication with the environment external to the blocking device 1, and facilitate the detachment of the workpiece.

When activating a specific blocking device 1 again is desired, so that it is capable of blocking a workpiece, the compressed air supply is interrupted and the shuttle 14 is brought back to the open position by said return means, such as a spring.

The invention also relates to an operating method of the blocking device 1, comprising the following steps:
a) supplying the vacuum to said blocking device 1, through the vacuum duct 11, so as to activate the blocking device 1 and allow it to block a piece to be machined;
b) supplying compressed air or other fluid to said blocking device 1, via the compressed air inlet duct 12, to move the shuttle 14 from the open position to the closed position, so as to interrupt the transmission of the vacuum in the vacuum duct 11 and allow the detachment of a piece.

In a further embodiment, the shutter device 18 comprises a shuttle 14 made of ferromagnetic material.

Said shuttle 14 is thus moved between said open position and said closed position by means of an electromagnetic actuator (not shown in the figures), having one or more windings adapted to generate a magnetic field upon the passage of current. Therefore, thanks to the passage of current in the winding of the electromagnetic actuator, a magnetic field is generated, which interferes with the ferromagnetic shuttle 14 by moving it.

The operation of the blocking device according to the present embodiment takes place in a similar way to that of the previous one, however, in this case, the actuation of the shuttle does not take place pneumatically, but by means of the electromagnetic actuator, following the generation of the electromagnetic field that moves the ferromagnetic shutter.

A further advantage of the present invention is the fact that the driven axis is perpendicular to the main direction of development of the chamber.

### Advantages

An advantage of the present invention is to provide a blocking device in which it is possible to activate and deactivate a vacuum, independently of the other blocking devices present in the machine, so as to avoid activating the vacuum in blocking devices not in use.

Another advantage of the present invention is facilitating the loading of a plurality of small-sized pieces into the machine, by activating the necessary blocking devices as the different pieces are loaded.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Blocking device (1) of a workpiece, comprising
a body (19), having an upper surface (17), intended to support said workpiece to clamp it,
wherein said upper surface (17) has at least one opening (173), and
wherein a vacuum duct (11) is formed inside said body (19) configured to be connected, when the blocking device (1) is in use, to a vacuum generating device for generating a vacuum, in particular a vacuum pump (P) connected to said at least one opening (173),
**characterized in that** said blocking device (1) comprises a shutter device (18) arranged inside said body (19) configured to selectively close and open said vacuum duct (11).

2. Blocking device (1) according to the preceding claim, **characterized**
**in that** said body (19) has inside a chamber (15), obtained in said body (19) and communicating with said vacuum duct (11), and
**in that** said shutter device (18) comprises
a shuttle (14), housed in said chamber (15) and movable between an opening position, in which the passage of the vacuum in said vacuum duct (11) is allowed, and a closed position, in which the passage of the vacuum in said vacuum duct (11) is prevented, and
return means for returning said shuttle from said closed position to said open position.

3. Blocking device (1) according to the preceding claim, **characterized in that** said return means, such as a spring and the like, are arranged between said shuttle (14) and said body (19).

4. Blocking device (1) according to any one of claims 2 or 3, **characterized in that** it comprises a gasket (16), arranged between said shuttle (14) and the walls of said chamber (15), and shaped so as to be sealed with said shuttle (14), when the latter is in said closed position.

5. Blocking device (1) according to any one of the preceding claims, **characterized**
**in that** it comprises at least one inlet conduit for compressed air or other fluid (12), and
**in that** said shutter device (18) is arranged so as to close and selectively open said vacuum duct (11), by activating compressed air, or other fluid, passing through said compressed air inlet duct (12).

6. Blocking device (1) according to the preceding claim, when dependent on any one of the claims 2 or 3, **characterized in that** said shuttle (14) can be operated pneumatically, through said compressed air duct (12), and it is thus movable between said open position and said closed position.

7. Blocking device (1) according to any one of claims 2-6, **characterized in that** said vacuum duct (11) comprises a first portion (111) and a second portion (112), between which said chamber is interposed (15), and wherein said shuttle (14) is movable between an open position, in which the passage of the vacuum between said first portion (111) of said vacuum duct (11) and said second portion (112) is allowed, and a closed position, in which the passage of the vacuum between said first portion (111) of said vacuum duct (11) and said second portion (112) is prevented.

8. Blocking device (1), according to any one of the preceding claims, **characterized in that** it comprises a fast vacuum outlet channel (13), in fluid communication with the environment outside the blocking device (1),
wherein, when said shutter device (18) opens said vacuum conduit (11), said fast vacuum outlet channel (13) is not in fluid communication with said vacuum conduit (11), and
wherein, when said shutter device (18) closes said vacuum conduit (11), said fast vacuum outlet channel (13) is in fluid communication with said vacuum conduit (11).

9. Blocking device (1) according to the preceding claim, when dependent on any one of claims 2-7, **characterized in that** said shuttle (14) is shaped so that, when it is in the open position, said outlet channel fast vacuum (13) is not in fluid communication with said vacuum conduit (11), and when it is in the closed position, said rapid vacuum outlet channel (13) is in fluid communication with said second portion (112) of said vacuum duct (11).

10. Blocking device (1) according to any one of claims 2 - 4, **characterized**
**in that** said shuttle (14) is made of ferromagnetic material and
**in that** it comprises an electromagnetic actuator, capable of producing an electromagnetic field on command, so as to move said shuttle (14) from said open position to said closed position.

11. Base-blocking device assembly (A) comprising
a blocking device (1) according to any one of claims 5-9,
a support base (2), suitable for coupling with said blocking device (1), provided with a vacuum supply channel (21) and at least one compressed air or other fluid supply channel (22), arranged to be connected, in use, respectively to said vacuum pipe (11) and said compressed air inlet pipe (12).

12. Machine (M), to work pieces made pf wood or similar materials, composite material, polymeric material, ceramic material or other materials, comprising
a base (5), which extends in one direction (X),
a work surface, arranged on said base (5) and having one or more bars (3), each oriented in a direction (Y), transversal to said direction (X), slidingly coupled to said base (5) and movable along said direction (X), along which at least one vacuum transmission channel (31) is arranged, connected, in use, to a vacuum generation device for generating a vacuum, in particular a vacuum pump (P), and at least one vacuum channel transmission of compressed air or other fluid (32), connected, in use, to a compressed air network,
at least one support base (2), slidingly coupled to a respective bar (3), wherein said support base (2 ) has a vacuum supply channel (21), and at least one air supply channel compressed or other fluid (22), connected, in use, respectively to said at least one vacuum transmission channel (31), and to said at least one compressed air transmission channel (32),
**characterized in that** it comprises a blocking device (1) according to any one of claims 1-9, adapted to be coupled to said support base (2).

13. Machine (M) according to the preceding claim, **characterized in that** said at least one vacuum transmission channel (31) is formed, at least for a portion thereof, inside said bar (3).

14. Machine (M) according to any one of claims 11 or 12, **characterized in that** said at least one compressed air transmission channel (32) is formed, at least for a portion thereof, inside said bar (3).

15. Method of operation of the blocking device (1) according to any one of claims 5-9, comprising the following steps:
a) supplying the vacuum to said blocking device (1), through said vacuum duct (11), in such a way to activate said blocking device (1) and allow it to block a workpiece;
b) supplying compressed air or other fluid to said blocking device (1), through said compressed air inlet duct (12), to actuate said shutter device (18), in such a way as to interrupt the transmission of the vacuum in said vacuum duct (11) and allow the detachment of a piece.
